# EUROPEAN PATENT SPECIFICATION

(11) **EP 4 119 319 B1**
(45) Date of publication and mention of the grant of the patent: **27.12.2023**
(21) Application number: 22184957.3
(22) Date of filing: 14.07.2022
(51) Int. Cl.: B29B 15/12, D01D 11/02

(54) **METHOD OF FABRIC PROCESSING FOR IMPROVED CMC INFILTRATION**
VERFAHREN ZUR STOFFVERARBEITUNG FÜR VERBESSERTE CMC-INFILTRATION
PROCÉDÉ DE TRAITEMENT DE TISSU PERMETTANT D'AMÉLIORER L'INFILTRATION DE CMC

(30) Priority: 14.07.2021 US 202117375539
(43) Date of publication of application: 18.01.2023
(73) Proprietor: RTX Corporation, Farmington, CT 06032 (US)
(72) Inventor: KONOPASKE, Zachary P., West Hartford, 06119 (US); RIEHL, John D., Hebron, 06248 (US)
(74) Representative: Dehns

(56) References cited:
- DE-C- 738 680
- US-A- 2 920 373
- US-A- 3 137 893
- US-A- 3 460 416
- US-A1- 2012 213 997

## Description

### BACKGROUND

The present invention relates to ceramic matrix composites, and more particularly, to the preparation of woven ceramic fabrics for use in ceramic matrix composites.

In the processing of ceramic matrix composites (CMCs), there is a need to infiltrate matrix within and around tows. In a woven CMC system, there are often large voids that exist between adjacent tows of a preform that can become large defects after matrix infiltration. Such defects diminish interlaminar strength of the composite structure. Reducing tow size (i.e., the number of filaments per tow) can reduce pore size within the woven ceramic fabric and provides more accessible surface area for infiltration.

The document US 2012/213997 A1 discloses a roller having an outer surface with a plurality of spiked protrusions and tape under tension.

### SUMMARY

There is provided herein a method of preparing a woven fabric material for use in a ceramic matrix composite includes securing a woven fabric tape in tension across a roller, the roller having an outer surface with a plurality of spiked protrusions extending radially therefrom, each of the plurality of spiked protrusions having a diameter between 10 microns and 500 microns. The method further includes passing the woven fabric along the roller, such that the roller rotates with the passing of the woven fabric tape, thereby impinging the spiked protrusions into the woven fabric tape, and separating filaments within tows of the woven fabric tape by penetration of at least one of the spiked protrusions into the woven fabric tape, such that filaments within various tows of the woven fabric tape are pushed apart to form a separated woven fabric tape with a greater number of tows per unit area than the woven fabric tape.

There is also provided a system for processing a woven fabric tape for use in a ceramic matrix composite includes a first roller having an outer surface with a plurality of spiked protrusions and a tensioning means disposed to retain the woven fabric tape in contact with at least a subset of the spiked protrusions of the first roller. Each of the plurality of spiked protrusions has a diameter between 10 microns and 500 microns.

Features of embodiments are set forth in the dependent claims.

### BRIEF DESCRIPTION OF THE DRAWINGS

FIG. 1 is a simplified illustration of a system used to prepare a woven ceramic fabric.
FIG. 2 is an enlarged partial view of an outer surface of a roller belonging to the system.
FIGS. 3 and 4 are simplified plan views of standard and staggered distribution arrangements, respectively, of protrusions on the roller.
FIG. 5 is a flow chart illustrating steps of preparing the woven ceramic fabric for use in a ceramic matrix composite.

The figures may not be drawn to scale, and applications and embodiments of the present invention may include features and components not specifically shown in the drawings.

### DETAILED DESCRIPTION

This disclosure presents a system and method for separating tows within a woven ceramic fabric. The woven fabric can be passed over one or more rollers having protrusions (studs, pins, etc.) sized and spaced to mechanically separate the tows to increase tow number and decrease tow-to-tow spacing. The separated fabric has a more uniform pore distribution, which facilitates more even infiltration with ceramic particles during densification.

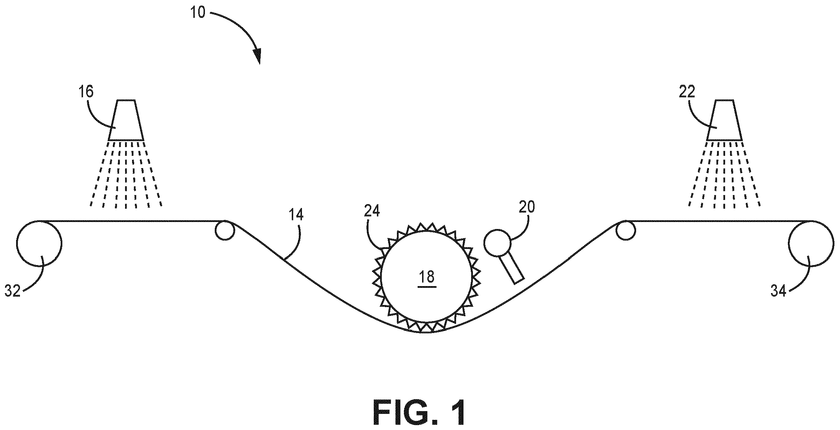

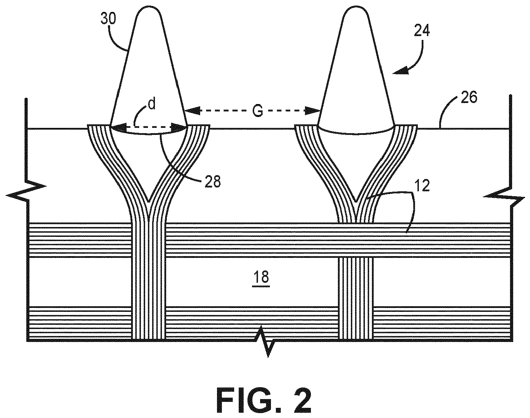

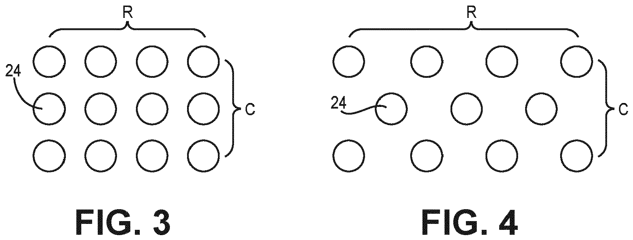

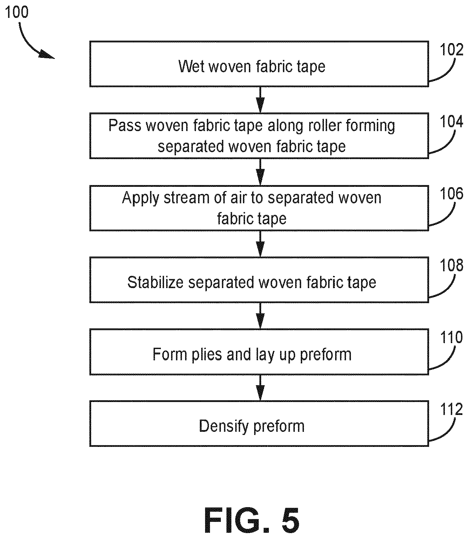

FIG. 1 is a simplified illustration of system 10 used to separate tows 12 (labeled in FIG. 2) of woven fabric tape 14. System 10 includes first applicator 16, roller 18, air knife 20, and second applicator 22. FIG. 2 is an enlarged partial view of roller 18 including protrusions 24. FIGS. 3 and 4 are simplified plan views of protrusions 24, represented as circles, in standard and staggered distributions (roller 18 is omitted for simplicity). FIG. 5 is a flowchart illustrating selected steps of method 100, used to prepare woven fabric tape 14 for use in a CMC. Steps 102-112 of method 100 are described below in combination with FIGS. 1-4. FIGS. 1-5 are discussed together.

Woven fabric tape 14 is formed from warp and weft tows 12 of bundled silicon carbide filaments. Other suitable ceramics are contemplated herein. Woven fabric tape 14 can be arranged in various weave patterns such as plain, harness (e.g., 3, 5, 8, etc.), twill, braid, or non-symmetric.

At step 102, woven fabric tape 14 can be optionally wetted to facilitate mechanical separation of tows 12. First applicator 16 can be a sprayer, bath, or other source of a solution of water or ethanol with a polymer material such as poly-vinyl alcohol (PVA) or poly-vinyl butyral (PVB) to be applied to woven fabric tape 14. Wetting can help reduce friction from roller 18 and protrusions 24 and protect filaments from breakage during the separation process.

At step 104, woven fabric tape 14 is passed along roller 18 to form a separated woven fabric tape 14. Roller 18 includes outer surface 26 with a number of protrusions 24 circumscribing roller 18. Protrusions 24 can be "spiked" in the sense that they are sized and shaped for at least partial insertion into or through tows 12, to separate tows 12 into smaller clusters or subtows of fewer filaments. Roller 18 and protrusions 24 can be formed from a metal or hard polymer material. Each protrusion 24 is connected to roller 18 by a base 28 and has an oppositely disposed tip 30. In an exemplary embodiment, tip 30 can be rounded to help prevent breakage of the filaments as a protrusion 24 is inserted into a tow 12. As shown in FIG. 2, each protrusion 24 can taper in the direction from base 28 to tip 30. Diameter d of protrusion 24 measured at base 28 can be 10 to 500 microns, and more specifically, 100 to 300 microns, to allow for the desired degree of penetration into and separation of tows 12 in woven tape 14 having the various weave patterns listed above. The same dimensions for diameter d can further apply to a non-tapered protrusion 24. In such an embodiment, diameter d as measured at base 28 and tip 30 would generally be the same.

Protrusions 24 can have a standard distribution along outer surface 26 of roller 18, as shown in FIG. 3. As used herein, "standard distribution" refers to the general alignment of protrusions 24 within rows R and columns C. Protrusions 24 can alternatively have a staggered distribution, as shown in FIG. 4, in which protrusions within a row R and/or column C is offset from those in the adjacent row R/column C. In either arrangement, each protrusion 24 can be spaced apart from the nearest adjacent protrusion 24 (in a row R and/or column C) by a gap G (labeled in FIG. 2) to achieve the desired degree of tow separation. Gap G can be sized to create a tow-to-tow spacing in separated woven fabric tape that is one-half to one-tenth of the tow-to-tow spacing in the original (i.e., non-separated) woven fabric tape 14. That is, separated woven fabric tape 14 has a greater number of tows (as subtows) per unit area with reduced tow-to-tow spacing.

In operation, as woven fabric tape 14 is passed under tension along outer surface 26 of roller 18, roller 18 rotates with the passage of woven fabric tape 14 and protrusions 24 impinge either/both the warp and weft tows 12 in such manner as to push apart, but not break filaments within tows 12. Tension can be applied to woven fabric tape 14 along system 10 and particularly, roller 18, using either/both of source spool 32 and take-up spool 34 (FIG. 1), or other suitable tensioning means. Protrusions 24 do not necessarily separate each tow 12 along its entire length, and may instead only separate filaments of a particular tow 12 along discrete segments. Separated woven fabric tape 12 may still have a greater number of tows per unit area than in the pre-separated state. Depending on the number and placement of protrusions 24, some tows 12 may have less contact with the protrusions 24 or may not encounter protrusions 24 at all.

An alternative embodiment can include multiple adjacent rollers 18 (e.g., a first roller and second roller) to help further separate tows 12 and increase homogeneity in separated woven fabric tape 14. The first and second rollers can have differing arrangements of protrusions 24 on the respective outer surfaces 26 (e.g., standard and staggered, oppositely staggered, etc.), have differently sized or shaped protrusions 24, or can be the same, depending on the desired pattern and degree of tow separation.

At step 106, a stream of air can optionally be applied to woven fabric tape 14 using, for example, air knife 20. Air knife 20 can be positioned such that a stream of air perpendicularly impinges woven fabric tape 14 before, during, or just after roller 18. Air knife 20 can enhance the degree of the separated state of woven fabric tape 14 through the application of concentrated streams of air to tows 12. Incorporation of air knife 20 may be particularly desirable when using a high surface tension wetting agent (e.g., water) in step 102, as the applied air stream can help prevent surface tension from pulling tows/filaments together.

At step 108, woven fabric tape 14 can optionally be stabilized with a polymer binder. Applicator 22 can be a source of the polymer binder material (e.g., a sprayer, bath, etc.). Exemplary polymer binders can include poly-vinyl alcohol (PVA) or poly-vinyl butyral (PVB). Once the binder is applied, woven fabric tape 14 can be dried using heat or an air dryer if desired. It should be noted that step 108 may not be necessary if PVA or PVB was applied to a sufficient degree in wetting step 102. In such a case, step 108 merges with step 102.

At step 110, stabilized/separated woven fabric tape 14 can be cut into plies and arranged into a desired two or three dimensional preform structure. Step 110 can also include localized application of ceramic particles to enhance particular regions of the preform structure.

At step 112, the preform structure can undergo matrix formation and densification using a chemical vapor infiltration or deposition (CVI or CVD) process. During densification, the plies are infiltrated by reactant vapors, and a gaseous precursor deposits on the fibers. The matrix material can be a silicon carbide or other suitable ceramic material. Densification is carried out until the resulting CMC has reached the desired residual porosity.

The woven fabric formed using method 100 has more evenly distributed surface area for receiving ceramic particles during infiltration due to the spreading of filaments and tows allowing for more robust matrix formation of the multi-ply preform structure, providing enhanced interlaminar strength versus more clustered tow arrangements. The resulting CMC formed with the woven fabric can be incorporated into aerospace, maritime, or industrial equipment, to name a few, non-limiting examples.

### Discussion of Possible Embodiments

The following are non-exclusive descriptions of possible embodiments of the present invention.

A method of preparing a woven fabric material for use in a ceramic matrix composite includes securing a woven fabric tape in tension across a roller, the roller having an outer surface with a plurality of spiked protrusions extending radially therefrom, each of the plurality of spiked protrusions having a diameter between 10 microns and 500 microns. The method further includes passing the woven fabric along the roller, such that the roller rotates with the passing of the woven fabric tape, thereby impinging the spiked protrusions into the woven fabric tape, and separating filaments within tows of the woven fabric tape by penetration of at least one of the spiked protrusions into the woven fabric tape, such that filaments within various tows of the woven fabric tape are pushed apart to form a separated woven fabric tape with a greater number of tows per unit area than the woven fabric tape.

The method of the preceding paragraph can optionally include, additionally and/or alternatively, any one or more of the following features, configurations and/or additional components:
In the above method, the woven fabric material can include silicon carbide.

Any of the above methods can further include wetting the woven fabric tape prior to passing the woven fabric tape along the roller.

In any of the above methods, wetting the woven fabric tape can include applying a solution of water or ethanol with polyvinyl-alcohol or polyvinyl-butyral.

Any of the above methods can further include applying a stream of air to the separated woven fabric tape.

Any of the above methods can further include applying a polymer material to the separated woven fabric tape.

Any of the above methods can further include forming the separated woven fabric into a plurality of plies, laying up the plurality of plies to form a preform, and densifying the preform.

In any of the above methods, the step of densifying the preform can include one of a chemical vapor infiltration and a chemical vapor deposition process.

A system for processing a woven fabric tape for use in a ceramic matrix composite includes a first roller having an outer surface with a plurality of spiked protrusions and a tensioning means disposed to retain the woven fabric tape in contact with at least a subset of the spiked protrusions of the first roller. Each of the plurality of spiked protrusions has a diameter between 10 microns and 500 microns.

The system of the preceding paragraph can optionally include, additionally and/or alternatively, any one or more of the following features, configurations and/or additional components:
In the above system, each of the plurality of spiked protrusions can have a diameter between 100 microns and 300 microns.

Any of the above systems can further include an applicator upstream of the first roller for applying a wetting material to the woven fabric tape.

In any of the above systems, the wetting material can include a solution of water or ethanol with polyvinyl-alcohol or polyvinyl-butyral.

Any of the above systems can further include an air knife located downstream of the first roller and directed to project air perpendicularly toward the woven fabric tape retained in contact with the subset of the spiked protrusions.

Any of the above systems can further include an applicator downstream of the first roller for applying a polymer binder to the woven fabric tape.

In any of the above systems, each of the plurality of spiked protrusions can have a base in communication with the outer surface of the roller and a tip oppositely disposed from the base.

In any of the above systems, the tip of at least one of the plurality of spiked protrusions can be rounded.

In any of the above systems, the plurality of spiked protrusions can be arranged as multiple aligned rows and columns.

In any of the above systems, the plurality of spiked protrusions can be arranged as multiple staggered rows and columns.

Any of the above systems can further include a second roller adjacent the first roller and having an outer surface with a plurality of spiked protrusions.

Therefore, it is intended that the invention not be limited to the particular embodiment(s) disclosed, but that the invention will include all embodiments falling within the scope of the appended claims.

## Claims

1. A method of preparing a woven fabric material (14) for use in a ceramic matrix composite, the method comprising:
securing a woven fabric tape (14) in tension across a roller (18), the roller (18) having an outer surface (26) with a plurality of spiked protrusions (24) extending radially therefrom, each of the plurality of spiked protrusions (24) having a diameter (d) between 10 microns and 500 microns;
passing the woven fabric tape (14) along the roller (18), such that the roller (18) rotates with the passing of the woven fabric tape (14), thereby impinging the spiked protrusions (24) into the woven fabric tape (14); and
separating filaments within tows (12) of the woven fabric tape (14) by penetration of at least one of the spiked protrusions (24) into the woven fabric tape (14), such that filaments within various tows (12) of the woven fabric tape (14) are pushed apart to form a separated woven fabric tape with a greater number of tows (12) per unit area than the woven fabric tape (14).

2. The method of claim 1, wherein the woven fabric tape (14) comprises silicon carbide.

3. The method of claim 1 or 2, and further comprising: wetting the woven fabric tape (14) prior to passing the woven fabric tape (14) along the roller (18), wherein, optionally, wetting the woven fabric tape (14) comprises applying a solution of water or ethanol with polyvinyl-alcohol or polyvinyl-butyral.

4. The method of any preceding claim, and further comprising: applying a stream of air to the separated woven fabric tape.

5. The method of any preceding claim, and further comprising: applying a polymer material to the separated woven fabric tape.

6. The method of any preceding claim, and further comprising:
forming the separated woven fabric into a plurality of plies;
laying up the plurality of plies to form a preform; and
densifying the preform, wherein the step of densifying the preform optionally comprises one of a chemical vapor infiltration and a chemical vapor deposition process.

7. A system (10) for processing a woven fabric tape (14) for use in a ceramic matrix composite, the system (10) comprising:
a first roller (18) having an outer surface (26) with a plurality of spiked protrusions (24); and
a tensioning means (32, 34) disposed to retain the woven fabric tape (14) in contact with at least a subset of the spiked protrusions (24) of the first roller (18),
wherein each of the plurality of spiked protrusions (24) has a diameter (d) between 10 microns and 500 microns.

8. The system (10) of claim 7, wherein each of the plurality of spiked protrusions (24) has a diameter (d) between 100 microns and 300 microns.

9. The system (10) of claim 7 or 8, and further comprising: a first applicator (16) upstream of the first roller (18) for applying a wetting material to the woven fabric tape (14), wherein the wetting material optionally comprises a solution of water or ethanol with polyvinyl-alcohol or polyvinyl-butyral.

10. The system (10) of any of claims 7 to 9, and further comprising: an air knife (20) located downstream of the first roller (18) and directed to project air perpendicularly toward the woven fabric tape (14) retained in contact with the subset of the spiked protrusions (24).

11. The system (10) of any of claims 7 to 10, and further comprising: a second applicator (22) downstream of the first roller (18) for applying a polymer binder to the woven fabric tape (14), wherein the polymer binder optionally comprises one of polyvinyl-alcohol or polyvinyl -butyral.

12. The system (10) of any of claims 7 to 11, wherein each of the plurality of spiked protrusions (24) has a base (28) in communication with the outer surface (26) of the roller (18) and a tip (30) oppositely disposed from the base (28), wherein the tip (30) of at least one of the plurality of spiked protrusions (24) is optionally rounded.

13. The system (10) of any of claims 7 to 12, wherein the plurality of spiked protrusions (24) are arranged as multiple aligned rows (R) and columns (C).

14. The system (10) of any of claims 7 to 12, wherein the plurality of spiked protrusions (24) are arranged as multiple staggered rows (R) and columns (C).

15. The system of any of claims 7 to 14, and further comprising: a second roller adjacent the first roller and having an outer surface with a second plurality of spiked protrusions.

## Patentansprüche

1. Verfahren zum Vorbereiten eines gewebten Stoffmaterials (14) zur Verwendung in einem Keramikmatrix-Verbundwerkstoff, wobei das Verfahren Folgendes umfasst:
Befestigen eines gewebten Stoffbandes (14) unter Spannung über einer Walze (18), wobei die Walze (18) eine Außenfläche (26) mit einer Vielzahl von sich radial davon erstreckenden, mit Stacheln versehenen Vorsprüngen (24) aufweist, wobei jeder der Vielzahl von mit Stacheln versehenen Vorsprünge (24) einen Durchmesser (d) zwischen 10 Mikrometer und 500 Mikrometer aufweist;
Führen des gewebten Stoffbandes (14) entlang der Walze (18), sodass sich die Walze (18) beim Vorbeilaufen des gewebten Stoffbandes (14) dreht, wodurch die mit Stacheln versehenen Vorsprünge (24) in das gewebte Stoffband (14) eindringen; und
Trennen von Filamenten innerhalb von Zügen (12) des gewebten Stoffbandes (14) durch Eindringen von mindestens einem der mit Stacheln versehenen Vorsprünge (24) in das gewebte Stoffband (14), so dass Filamente innerhalb von verschiedenen Zügen (12) des gewebten Stoffbandes (14) auseinandergezogen werden, um ein getrenntes gewebtes Stoffband mit einer größeren Anzahl von Zügen (12) pro Flächeneinheit als das gewebte Stoffband (14) zu bilden.

2. Verfahren nach Anspruch 1, wobei das gewebte Stoffband (14) Siliciumcarbid umfasst.

3. Verfahren nach Anspruch 1 oder 2, und ferner umfassend: Befeuchten des gewebten Stoffbandes (14), bevor das gewebte Stoffband (14) entlang der Walze (18) geführt wird, wobei optional das Befeuchten des gewebten Stoffbandes (14) Auftragen einer Lösung aus Wasser oder Ethanol mit Polyvinylalkohol oder Polyvinylbutyral umfasst.plying was translated as Auftragen,

4. Verfahren nach einem der vorstehenden Ansprüche, und ferner umfassend: Anwenden eines Luftstroms auf das getrennte gewebte Stoffband.

5. Verfahren nach einem der vorstehenden Ansprüche, und ferner umfassend: Aufbringen eines Polymermaterials auf das getrennte gewebte Stoffband.

6. Verfahren nach einem der vorstehenden Ansprüche, und ferner umfassend:
Formen des getrennten gewebten Stoffbandes in eine Vielzahl von Lagen;
Aufeinanderlegen der Vielzahl von Lagen, um einen Vorformling zu bilden; und
Verdichten des Vorformlings, wobei der Schritt des Verdichtens des Vorformlings wahlweise eine chemische Dampfinfiltration oder einen chemischen Dampfabscheidungsprozess umfasst.

7. System (10) zum Verarbeiten eines gewebten Stoffbandes (14) zur Verwendung in einem Keramikmatrix-Verbundwerkstoff, wobei das System (10) umfasst:
eine erste Walze (18) mit einer Außenfläche (26) mit einer Vielzahl von mit Stacheln versehenen Vorsprüngen (24); und
ein Spannmittel (32, 34), das so angeordnet ist, dass es das gewebte Stoffband (14) in Kontakt mit mindestens einer Teilmenge der mit Stacheln versehenen Vorsprünge (24) der ersten Walze (18) hält,
wobei jeder der Vielzahl von mit Stacheln versehenen Vorsprünge (24) einen Durchmesser (d) zwischen 10 Mikrometer und 500 Mikrometer aufweist.

8. System (10) nach Anspruch 7, wobei jeder der Vielzahl von mit Stacheln versehenen Vorsprüngen (24) einen Durchmesser (d) zwischen 100 Mikrometer und 300 Mikrometer aufweist.

9. System (10) nach Anspruch 7 oder 8, und ferner umfassend: einen ersten Applikator (16) stromaufwärts der ersten Walze (18) zum Auftragen eines Benetzungsmaterials auf das gewebte Stoffband (14), wobei das Benetzungsmaterial optional eine Lösung von Wasser oder Ethanol mit Polyvinylalkohol oder Polyvinylbutyral umfasst.

10. System (10) nach einem der Ansprüche 7 bis 9 und ferner umfassend: ein Luftmesser (20), das sich stromabwärts der ersten Walze (18) befindet und so ausgerichtet ist, dass es Luft senkrecht auf das in Kontakt mit der Teilmenge der mit Stacheln versehenen Vorsprünge (24) gehaltene gewebte Stoffband (14) projiziert.

11. System (10) nach einem der Ansprüche 7 bis 10 und ferner umfassend: einen zweiten Applikator (22) stromabwärts der ersten Walze (18) zum Auftragen eines Polymerbindemittels auf das gewebte Stoffband (14), wobei das Polymerbindemittel optional entweder Polyvinylalkohol oder Polyvinylbutyral umfasst.

12. System (10) nach einem der Ansprüche 7 bis 11, wobei jeder der Vielzahl von mit Stacheln versehenen Vorsprünge (24) eine Basis (28) in Verbindung mit der Außenfläche (26) der Walze (18) und eine Spitze (30) aufweist, die gegenüber der Basis (28) angeordnet ist, wobei die Spitze (30) mindestens eines der Vielzahl von mit Stacheln versehenen Vorsprüngen (24) optional abgerundet ist.

13. System (10) nach einem der Ansprüche 7 bis 12, wobei die Vielzahl von mit Stacheln versehenen Vorsprüngen (24) als mehrere ausgerichtete Reihen (R) und Spalten (C) angeordnet ist.

14. System (10) nach einem der Ansprüche 7 bis 12, wobei die Vielzahl von mit Stacheln versehenen Vorsprüngen (24) als mehrere gestaffelte Reihen (R) und Spalten (C) angeordnet ist.

15. System nach einem der Ansprüche 7 bis 14, und ferner umfassend: eine zweite Walze, die an die erste Walze angrenzt und eine Außenfläche mit einer zweiten Vielzahl von mit Stacheln versehenen Vorsprüngen aufweist.

## Revendications

1. Procédé de préparation d'un matériau de tissu tissé (14) destiné à être utilisé dans un composite à matrice céramique, le procédé comprenant :
la fixation d'une bande de tissu tissé (14) en tension sur un rouleau (18), le rouleau (18) ayant une surface extérieure (26) avec une pluralité de saillies à pointes (24) s'étendant radialement à partir de celle-ci, chacune de la pluralité de saillies à pointes (24) ayant un diamètre (d) compris entre 10 microns et 500 microns ;
le passage de la bande de tissu tissé (14) le long du rouleau (18), de telle sorte que le rouleau (18) tourne avec le passage de la bande de tissu tissé (14), faisant ainsi entrer en collision les saillies à pointes (24) avec la bande de tissu tissé (14) ; et
la séparation de filaments dans les câbles (12) de la bande de tissu tissé (14) par pénétration d'au moins une des saillies à pointes (24) dans la bande de tissu tissé (14), de telle sorte que les filaments dans les différents câbles (12) de la bande de tissu tissé (14) soient écartées pour former une bande de tissu tissé séparée avec un plus grand nombre de câbles (12) par unité de surface que le ruban de tissu tissé (14).

2. Procédé selon la revendication 1, dans lequel la bande de tissu tissé (14) comprend du carbure de silicium.

3. Procédé selon la revendication 1 ou 2, et comprenant également : le mouillage de la bande de tissu tissé (14) avant de faire passer la bande de tissu tissé (14) le long du rouleau (18), dans lequel, éventuellement, le mouillage de la bande de tissu tissé (14) comprend l'application d'une solution d'eau ou d'éthanol avec du poly(alcool vinylique) ou du polyvinylbutyral.

4. Procédé selon une quelconque revendication précédente, comprenant également : l'application d'un courant d'air sur la bande de tissu tissé séparée.

5. Procédé selon une quelconque revendication précédente, et comprenant également : l'application d'un matériau polymère sur la bande de tissu tissé séparée.

6. Procédé selon une quelconque revendication précédente, et comprenant également :
la formation du tissu tissé séparé en une pluralité de plis ;
le couchage de la pluralité de plis pour former une préforme ; et
la densification de la préforme, dans lequel l'étape de densification de la préforme comprenant éventuellement un parmi une infiltration chimique en phase vapeur et un processus de dépôt chimique en phase vapeur.

7. Système (10) de traitement d'une bande de tissu tissé (14) destinée à être utilisée dans un composite à matrice céramique, le système (10) comprenant :
un premier rouleau (18) ayant une surface extérieure (26) avec une pluralité de saillies à pointes (24) ; et
un moyen de tension (32, 34) disposé de manière à retenir la bande de tissu tissé (14) en contact avec au moins un sous-ensemble des saillies à pointes (24) du premier rouleau (18),
dans lequel chacune de la pluralité de saillies à pointes (24) a un diamètre (d) compris entre 10 microns et 500 microns.

8. Système (10) selon la revendication 7, dans lequel chacune de la pluralité de saillies à pointes (24) a un diamètre (d) compris entre 100 microns et 300 microns.

9. Système (10) selon la revendication 7 ou 8, et comprenant également : un premier applicateur (16) en amont du premier rouleau (18) pour appliquer un matériau mouillant sur la bande de tissu tissé (14), dans lequel le matériau mouillant comprend éventuellement une solution d'eau ou d'éthanol avec du poly (alcool vinylique) ou du polyvinylbutyral.

10. Système (10) selon l'une quelconque des revendications 7 à 9, et comprenant également : une lame d'air (20) située en aval du premier rouleau (18) et dirigée de manière à projeter de l'air perpendiculairement vers la bande de tissu tissé (14) retenue en contact avec le sous-ensemble des saillies à pointes (24).

11. Système (10) selon l'une quelconque des revendications 7 à 10, et comprenant également : un second applicateur (22) en aval du premier rouleau (18) pour appliquer un liant polymère sur la bande de tissu tissé (14), dans lequel le liant polymère comprend éventuellement l'un parmi du poly (alcool vinylique) ou du polyvinylbutyral.

12. Système (10) selon l'une quelconque des revendications 7 à 11, dans lequel chacune de la pluralité de saillies à pointes (24) a une base (28) en communication avec la surface extérieure (26) du rouleau (18) et une pointe (30) disposé à l'opposé de la base (28), dans lequel la pointe (30) d'au moins une de la pluralité de saillies à pointes (24) est éventuellement arrondie.

13. Système (10) selon l'une quelconque des revendications 7 à 12, dans lequel la pluralité de saillies à pointes (24) est disposée sous forme de multiples rangées (R) et colonnes (C) alignées.

14. Système (10) selon l'une quelconque des revendications 7 à 12, dans lequel la pluralité de saillies à pointes (24) est disposée sous forme de multiples rangées (R) et colonnes (C) en dégradé.

15. Système selon l'une quelconque des revendications 7 à 14, et comprenant également : un second rouleau adjacent au premier rouleau et ayant une surface extérieure avec une seconde pluralité de saillies à pointes.
